# NEUE EUROPÄISCHE PATENTSCHRIFT

(11) **EP 2 168 425 B2**
(45) Veröffentlichungstag und Bekanntmachung des Hinweises auf die Entscheidung über den Einspruch: **16.09.2015**
(45) Hinweis auf die Patenterteilung: 07.12.2011
(21) Anmeldenummer: 09164079.7
(22) Anmeldetag: 30.06.2009
(51) Int. Cl.: A01D 41/127, A01D 43/08, A01D 75/00, A01D 67/00

(54) **Landwirtschaftliche Erntemaschine**
Agricultural harvester
Moissonneuse agricole

(30) Priorität: 26.09.2008 DE 102008049130
(43) Veröffentlichungstag der Anmeldung: 31.03.2010
(73) Patentinhaber: CLAAS Selbstfahrende Erntemaschinen GmbH, 33428 Harsewinkel (DE)
(72) Erfinder: Hohlfeld, Markus, 48431, Rheine (DE); Stremlau, Björn, 49509, Recke (DE)

(56) Entgegenhaltungen:
- EP-A- 1 269 825
- EP-A- 1 611 781
- DE-A1- 10 130 653
- DE-A1-102005 001 412

## Beschreibung

Die Erfindung betrifft eine als selbstfahrenden Feldhäcksler ausgeführte selbstfahrende landwirtschaftliche Erntemaschine mit einem angebauten Vorsatzgerät, welches in einer Nichtarbeitsposition durch wenigstens einer mit dem Boden in Kontakt stehenden Stützradanordnung abgestützt wird nach dem Oberbegriff von Anspruch 1.

Aufgrund der zunehmenden Leistungssteigerung von landwirtschaftlichen Erntemaschinen kommen immer größere und schwerere Vorsatzgeräte zum Einsatz. In der Regel werden Schneidwerke von Mähdreschern beim Straßentransport vom Mähdrescher abgekuppelt und werden auf einem Transportwagen abgelegt. Demgegenüber werden Maisgebisse und Maispflücker von Felhäckslern in der Regel für den Straßentransport nicht abgekuppelt, sondern verbleiben am Feldhäcksler. Mittels Unterschiedlicher Klappmechanismen können diese Vorsatzgeräte, wie auch Getreideschneidwerke, für den Straßentransport zur Erreichung einer schmaleren Breite verklappt werden. Dabei stellt die Normierung der zulässigen Achslast insbesondere an der Triebachse der landwirtschaftlichen Erntemaschinen bei den zunehmend breiter und schwerer ausgeführten Vorsatzgeräten ein Problem dar.

Aus der DE 199 18 551 ist eine als Feldhäcksler ausgeführte landwirtschaftliche Erntemaschine bekannt geworden, die frontseitig über einen ein landwirtschaftliches Arbeitsgerät aufnehmenden Zwischenanbau verfügt. Damit die Last des landwirtschaftlichen Arbeitsgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass beim Straßentransport zumindest ein Teil der Masse des landwirtschaftlichen Arbeitsgerätes über diese Stützräder auf dem Boden abgestützt wird. Die Adaptierung der Stützräder am Zwischenanbau der landwirtschaftlichen Erntemaschine erfordert jedoch eine erhebliche Versteifung dieses Zwischenanbaus, da beim Fahren auf unebenem Gelände erhebliche Stoßbelastungen auftreten können, die von dem Zwischenanbau aufgenommen werden müssen. Aufgrund dessen, dass die Achsen der Stützräder direkt an dem Zwischenanbau der landwirtschaftlichen Erntemaschine angeordnet sind, ist eine vertikale Bewegung der Stützräder relativ zu diesem Zwischenanbau nicht möglich. Dies führt dazu, dass beim Anheben des Zwischenanbaus die von den Stützrädern auf den Boden übertragene Last allmählich abnimmt und In dem Moment gleich Null wird, wenn die Stützräder ihren Kontakt zum Boden verloren haben. In diesem Zeitpunkt ist die Stützfunktion der Stützräder aufgehoben und die gesamte Last wirkt auf die Vorderachsen der Erntemaschine.

Aus der EP 1 281 247 B1 geht eine Vorrichtung zur Bodenkoplerung für Vorsatzgeräte an einem selbstfahrenden Mähdrescher hervor, deren Aufgabe es ist, schnell und genau auf Bodenunebenheiten durch Höhen- und Querverstellung des Vorsatzgerätes zu reagieren. Gelöst wird diese Aufgabe durch unterschledliche elektro-hydraulische Verbindungen zwischen den für die Bodenkopierung notwendigen Steuer- und Bedienelementen. Zwar wird hier eine effiziente Bodenkoplerung erreicht, jedoch wird das Gewicht des Vorsatzgerätes und des Schrägförderers unmittelbar In die Vorderachse des Mähdreschers eingeleitet, so dass es an einer Lastvertellung fehlt, die gerade bei breiteren und schwereren Vorsatzgeräten wichtig ist. Das Problem der Lastverteilung, wenn das Erntevorsatzgerät eine Transportposition eingenommen hat, wird nicht gelöst.

Die EP 1 269 825 A1 beschreibt einen selbstfahrenden Mähdrescher mit einem höhenverstellbaren Vorsatzgerät. Zur Höhenverstellung des Vorsatzgeräts dienen zwei Hubzylinder, die sich an der Vorderachse des Mähdreschers abstützen. Um die Bodenbelastung durch den Mähdrescher zu verringern, sind unter dem Schrägförderer des Mähdreschers in Bodenkontakt stehende Stützräder vorgesehen. Der Auflagedruck der Stützräder lässt sich über weitere zwei Hubzylinder regeln, die mit dem Schrägförderer verbunden sind. Konstruktiv ist die geschaffene Auflagedruckregelung aufwendig.

Der Erfindung liegt daher die Aufgabe zugrunde, die Nachteile des zitierten Standes der Technik zu vermeiden und eine Erntemaschine der eingangs näher bezeichneten Art so weiterzubilden, dass diese eine konstruktiv einfacher gestaltete Auflagedruckregelung aufweist.

Diese Aufgabe wird erfingdungsgemäß durch die kennzeichnenden Merkmale des Patentanspruchs 1 gelöst, wobei in den weiteren Patentansprüchen Merkmale aufgeführt sind, die diese Lösung in vorteilhafter Welse welterentwickeln. Unter dem Begriff selbstfahrender landwirtschaftlicher Erntemaschine ist nachfolgend ein selbstfahrender Feldhäcksler zu verstehen.

Indem der Auflagedruck des wenigstens einen am Vorsatzgerät angeordneten Stützrades bei Einnahme einer Nichtarbeitsposition des Vorsatzgerätes mittels einer Auflagedruckregeleinrichtung geregelt wird, wird sichergestellt, dass, wenn insbesondere schwere angebaute Vorsatzgeräte von der Erntemaschine zu transportieren sind, ein definierbarer Teil der Last das Vorsatzgerätes vom Stützrad aufgenommen wird, um die Triebachse und/oder die Lenkachse zu entlasten, so dass die normierten Achslasten entsprechend einhaltbar sind. Dabei ist die Aufnahmevorrichtung mittels mindestens eines Hubzylinders höhenbeweglich ausgeführt, wobei der Auflagedruck des wenigstens einen Stützrades auf den Boden durch die Druckbeaufschlagung und die Druckentlastung des wenigstens einen an der Aufnahmevorrichtung angeordneten Hydraulikzylinders, mittels dem die Aufnahmevorrichtung höhenbeweglich ist, regelbar ist, so dass ohne Einsatz von zusätzlichen Hydraulikzylindern und damit weniger kostenintensiv eine Auflagedruckregelung des wenigstens einen Stützrades möglich ist, um die zulässigen Achslasten der Erntemaschine beim Transport eines schweren Vorsatzgerätes einhalten zu können.

In einer vorteilhaften Ausgestaltung der Erfindung wird der Druckwert des Hydraulikzylinders mittels der Auflagedruckregeleinrichtung konstant geregelt, wenn das Vorsatzgerät eine Transportposition eingenommen hat, so dass eine konstante Achslast auf der Trieb- und/oder der Lenkachse der Erntemaschine während der Transportfahrt erreichbar ist.

Um stets sicherzustellen, dass der von der Triebachse und/oder der Lenkachse der landwirtschaftlichen Erntemaschine abzustützende Lastanteil den durch verschiedene Normen vorgeschriebenen Lastanteilen entspricht, wird der Druckwert des wenigstens einen an der Aufnahmevorrichtung angeordneten Hydraulikzylinders in Abhängigkeit von den Lastanteilen der Triebachse und/oder der Lenkachse eingestellt werden,

In einer weiteren vorteilhaften Ausgestaltung der Erfindung wird der Druckwert des wenigstens einen an der Aufnahmeeinrlchtung montierten Hydraulikzylinders in Abhängigkeit von der Art der montierten Aufnahmevorrichtung geregelt, so dass die Druckregelung an das jeweils montierte Vorsatzgerät und dessen Gewicht anpassbar ist und dies die Einhaltung der normierten Achslasten insbesondere für den unerfahrenen Bedlener erleichtert.

Im einfachsten Fall ist die Auflagedruckregeleinrichtung zur Regelung des Drucks des wenigstens einen Hydraulikzylinders der Aufnahmevorrichtung als ein Druckregelventil und/oder Druckbegrenzungsventil ausgebindet, wobei mittels Festlegung eines Druckschwellwertes die Druckregelung erreichbar ist. Um eine automatische Auflagedruckregelung zu erreichen ist, liegt es zudem im Rahmen der Erfindung eine elektronische Auflagedruckregeleinrichtung einzusetzen.

Die Triebachse und/oder die Lenkachse der Erntemaschine ist mit wenigstens einem lastsensierenden Sensor ausgerüstet, der lastabhängige Signale an eine Steuer- und Auswerteeinheit übertragt und ein entsprechendes Steuersignal generiert wird, dass den Druck des an der Aufnahmevorrichtung angeordneten Hubzylinder regelt, um so die Stützlast des wenigstens einen Stützrades einstellen zu können. Vorzugsweise ist zur Anzeige des eingestellten Druckwertes und des tatsächlichen Druckwertes eine Anzeigeneinheit vorgesehen, so dass der Bediener permanent über die Druckregelung informiert ist.

Gemäss der Erfindung erfolgt beim Unter- bzw. Überschreiten einer definierbaren Achssolllast der Triebachse und/oder der Lenkachse eine akustische und/oder optische warnmeldung, so dass der Bediener der Erntemaschine eine Rückmeldung darüber erhält, dass der von ihm vorgegebene Druckwert für den Druck im wenigstens einen Hubzylinder nicht zu der erforderlichen Achslastverteilung führt, wenn das Vorsatzgerät in eine Transportposition verbracht wurde oder ob ein automatisches Auflagedruckregelsyetem fehlerhaft arbeitet. Vorzugsweise wird die Warnmeldung auf einer in der Fahrerkabine angeordneten Anzeigeneinheit zur Anzeige gebracht, so dass der Fahrer sofort die erforderlichen Schritte zur Abhilfe einleiten kann.

Im Fall, dass das montierte und zu transportierende Vorsatzgerät relativ breit und schwer ist, erweist es sich als vorteilhaft, dass das wenigstens eine Stützrad an einem Wagen montiert ist, der unter das Vorsatzgerät und/oder die Erntemaschine schiebbar und dort verrastbar ist, so dass eine größere Auflagefläche zur Ablage des Vorsatzgerätes vorhanden ist. In einer konkreten Ausführungsform weist der Wagen ein Rahmengestell und mindestens ein sich nach unten erstreckendes Stützrad auf, wobei das Rahmengestell zur Abstützung des Vorsatzgerätes und zur Gewichtsentlastung der Triebachse und/oder Lenkachse der Erntemaschine bei einer Transportfahrt lösbar am an der Erntemaschine angebrachten Vorsatzgeräte befestigt und zum Erntebetrieb vom Vorsatzgerät trennbar ist. Im befestigten Zustand nimmt der Wagen verteilhaft eine höhenbewegliche Schwimmstellung ein, so dass auch beim Überfahren von Bodenunebenheiten der Auflagedruck konstant regelbar ist und somit die Achslastverteilung konstant bleibt, da das Stützrad permanent in Bodenkontakt ist.

Weitere vorteilhafte Ausgestaltungen sind Gegenstand weiterer Unteransprüche und werden nachfolgend anhand von Zeichnungen näher erläutert.

Es zeigen:
- Figur 1:: eine schematische Darstellung einer landwirtschaftlichen Erntemaschine in Form eines Feldhäckslers mit einem montierten auf einem Wagen ab- gelegten Vorsatzgerät
- Figur 2: eine erste Prinzipdarstellung eines auf einem Wagen abgelegten Vor- satzgerätes beim Durchfahren einer Bodensenke mit der erfindungsge- mäßen Auflagedruckreleleinrichtung
- Figur 3: eine zweite Prinzipdarstellung eines auf einem Wagen abgelegten Vor- satzgerätes beim Überfahren einer Bodenwelle mit der erfindungsgemä- ßen Auflagedruckregeleinrichtung

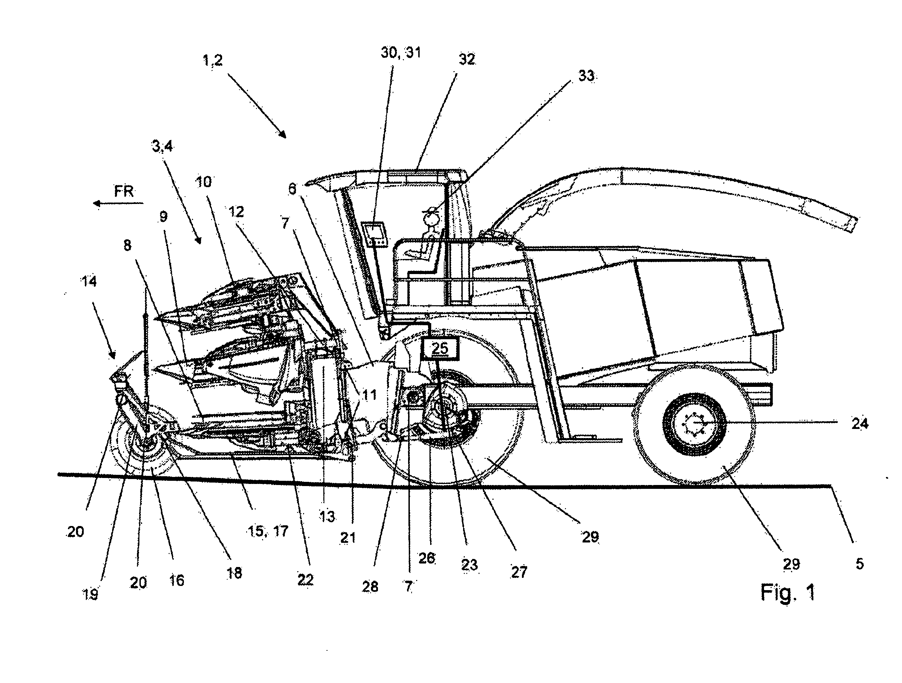

Figur 1 zeigt eine Seitenansicht einer selbstfahrenden Erntemaschine 1, die als Feldhäcksler 2 ausgeführt und der frontseitig in Fahrtrichtung FR ein Vorsatzgerät 3 in Form eines Maisgebisses 4, zugeordnet ist. Das Vorsatzgerät 3 dient dazu, das zu bearbeitende Erntegut vom Feldboden 5 aufzunehmen und zu schneiden, so dass es den nachgeordneten hier nicht näher abgebildeten Arbeitsaggregaten zugeführt werden kann. Dem Vorsatzgerät 3 ist eine Aufnahmevorrichtung bzw. ein Einzugsgehäuse 6 nachgeordnet, wobei das Einzugsgehäuse 6 über eine Schwenkachse 7 vertikal zu der Fahrtrichtung FR und zum Ausgleich der Längsneigung verschwenkbar ist.

Das Vorsatzgerät 3 ist klappbar ausgeführt und besteht aus drei Sektionen 8, 9, 10 wobei die mittlere Sektion 9 über Koppelungspunkte 11 mit dem Einzugsgehäuse 7 des Feldhäckslers 2 verbunden ist. Beidseitig der mittleren Sektion 9 sind die äußeren Sektionen 8, 10 hochgeklappt in Schwenklagern 12, die sich auf der Rückseite des mittleren Maschinengestells 13 auf nicht näher gezeigten Lagerkonsolen abstützen, mit diesem verbunden. Die hochgeklappte Lage ist gleichzeitig die Transportposition des Vorsatzgerätes 3. Mit dieser klappbaren Ausführung können beispielsweise Arbeitsbreiten bis zu etwa 9 Metern realisiert werden. Ein Wagen 14, der ein Rahmengestell 15 und ein vorlaufendes mit dem Boden 5 in Kontakt stehendes Stützrad 16 aufweist, dient zur Abstützung des Vorsatzgerätes 3 während der Transportfahrt. Für den Ernteeinsatz ist der Wagen 14 demontierbar. Das Rahmengestell 15 besteht aus zwei seitlich nebeneinander angeordneten, rückwärtigen Tragelementen 17, die sich unterhalb des Vorsatzgerätes 3 nahezu horizontal erstrecken. An der in Fahrtrichtung FR liegenden vorderen Endseite des jeweiligen Tragelements 17 erstrecken sich schräg nach oben führende Streben 18. An einer an der oberen Strebe 18 angelenkten sich leicht schräg nach unten erstreckenden Schwinge 19 ist das Stützrad 16 angeordnet. Das Stützrad 16 ist um seine Drehachse 20 drehbar an der Schwinge 19 angelenkt. Die Befestigung des Vorsatzgerätes 3 am Wagen 14 erfolgt im endseitigen Bereich des jeweiligen sich nahezu horizontal erstreckenden Tragelementes 17 in einem Koppelungspunkt 21 Während das Vorsatzgerät 3 mit dem Wagen 14 im Koppelungspunkt 21 fixiert ist, ist es um eine horizontale Achse vertikal verschwenkbar und nimmt eine Schwimmstellung ein. Im auf dem Wagen 14 abgelegten Zustand liegt die mittlere Sektion 9 des verklappten Vorsatzgerätes 3 auf dem Auflagepunkt 22 des Wagens 15 auf, so dass ein definierbarer Gewichtsanteil des Vorsatzgerätes 3 vom Wagen 14 abgestützt wird. Aufgrund der Schwimmstellung des Wagens 14 kann das dem Vorsatzgerät 3 vorlaufende Stützrad 16 des Wagens 14 Bodenunebeneinheiten nachvollziehen und verbleibt während der Transportfahrt im ständigen Bodenkontakt.

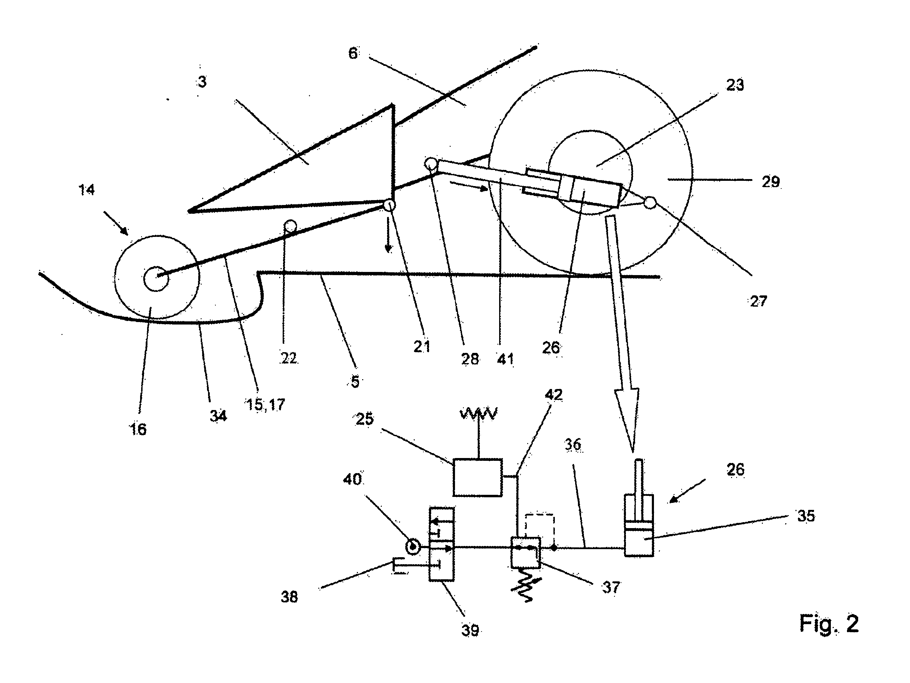

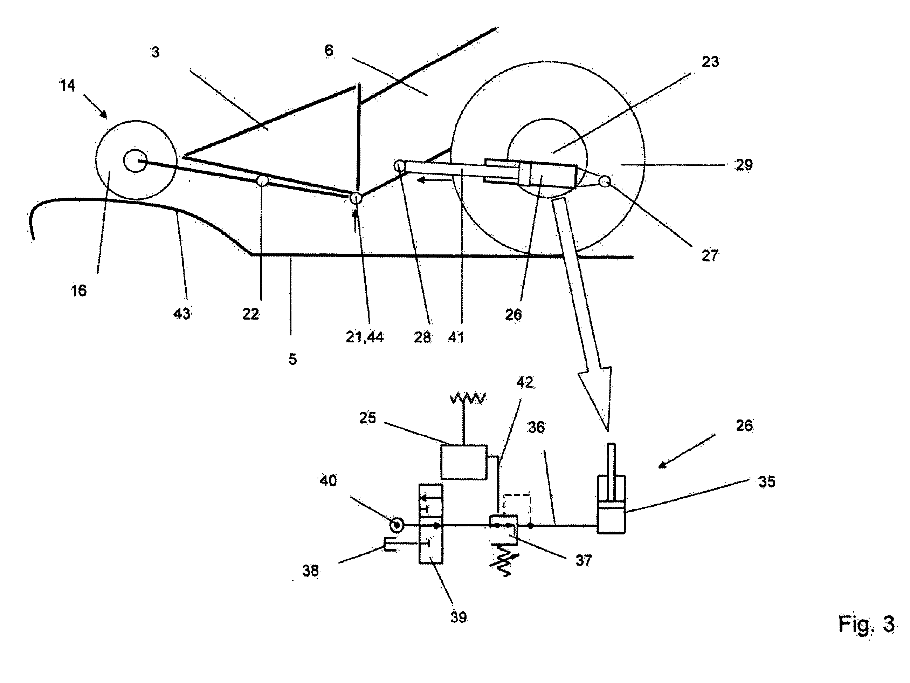

Damit beim Durchfahren von Bodenunebenheiten, d.h. beim Überfahren von Bodenwellen oder Durchfahren von Bodensenken keine Veränderung der Achslastverteilung an der Triebachse 23 und/oder der Lenkachse 24 auftreten, wird erfindungsgemäß der Auflagedruck des wenigstens einen Stützrades 16 auf dem Boden 5 mittels einer Auflagedruckregeleinrichtung 25 geregelt, wenn sich das Vorsatzgerät 3 abgestützt auf dem Wagen 14 in Transportposition befindet Im Ausführungsbeispiel erfolgt die in den Figuren 2 und 3 noch näher darzulegende Auflagedfuckregelung mittels der beidseitig am Einzugsgehäuse 6 der Erntemaschine 1 angeordneten Hubzylinder 26, durch deren Druckbeaufschlagung und Druckentlastung der Auflagedruck des Stützrades 16 auf dem Boden 5 regelbar ist. Auch wäre es denkbar, dass das Einzugsgehäuse 6 über nur einen Hubzylinder 26 oder eine beliebige Anzahl von Hubzylindern 26 abgestützt wird. Die Hubzylinder 26 sind drehbeweglich im unteren Bereich der vorderen Triebachse 23 in einem Drehpunkt 27 drehbeweglich angeordnet, wobei die jeweilige Kolbenstange der Hubzylinder 26 drehbeweglich seitlich in einem Drehpunkt 28 im unteren Bereich des Einzugsgehäuses 6 angeordnet sind. Die Hubzylinder 26 sind nicht näher dargestellt einfachwirkend ausgeführt und sind über eine Leitung 29 mit der Auflagedruckregeleinrichtung 25 in Wirkverbindung. Zur Steuerung der Hubzylinder 26 kann im einfachsten Fall dem Drucksystem der Hubzylinder ein in den Figuren 2 und 3 noch näher darzustellendes Druckregelventil zugeordnet sein. Mittels des Druckregelventils kann der Druck in den Hubzylindern 26 durch Festlegung eines Druckschwellwertes konstant geregelt werden, so dass mittels der Druckregelung die Möglichkeit geschaffen wird, die auf die Triebachse 23 und/oder Lenkachse 24 der landwirtschaftlichen Erntemaschine 1 übertragene Achslast auf eine festen Wert zu begrenzen, wenn während der Transportfahrt vom Wagen 14 eine Teillast des zu transportierenden und mit dem Wagen 14 verbundenen Vorsatzgerätes 3 abgestützt wird, um eine konstante den Normierungen entsprechende Achslastverteilung erreichen zu können.

Um stets sicherzustellen, dass der von der Triebachse 23 und/oder Lenkachse 24 der landwirtschaftlichen Erntemaschine 1 abzustützende Lastanteil den durch verschiedene Normen vorgeschriebenen Lastanteilen entspricht, kann jeder der Achsen 23, 24 der Erntemaschine 1 zumindest ein an sich bekannter hier nicht näher dargestellter lastsensierender Sensor zugeordnet sein, der beispielsweise als Drucksensor zur Ermittlung des Reifendrucks der Laufräder 29 ausgeführt ist. Die lastsensierenden Sensoren generieren in Abhängigkeit von der jeweiligen Achslast hier nicht näher dargestellte Eingangssignale, die in einer Steuer- und Auswerteeinheit 30 in Abhängigkeit von einem definierbaren Achslastveteilungsverhältnis ein Ausgangssignal erzeugt, welches über ein beliebiges und hier nicht gezeigtes Schaltventil zu einer Druckbeaufschlagung oder Druckentlastung des wenigstens einen am Einzugsgehäuse 6 angeordneten Hubzylinders 26 führt. Zudem kann dem wenigstens einem Stützrad 16 ein nicht dargestellter lastsensierender Sensor zugeordnet sein, der ein von der Achslast abhängiges Eingangssignal generiert, welches von einer Steuer- und Auswerteeinheit 30 als Maß für den durch das Vorsatzgerät auf den Feldboden 5 wirkenden Druck heranziehbar ist. Auf diese Weise wird es möglich, die Achslastverteilung auch in Abhängigkeit von der Abstützung des Vorsatzgerätes durch das Stützrad 16 auf den Feldboden 5 einzustellen.

Vorzugsweise ist zur Anzeige des eingestellten Druckwertes und des tatsächlichen Druckwertes eine Anzeigeneinheit 31 in der Fahrerkabine 32 vorgesehen, so dass der Bediener 33 der Erntemaschine 1 eine permanente Kontrolle über die Druckregelung des wenigstens einen am Einzugsgehäuse 6 angeordneten Hubzylinders 26 hat.

Gemäss der Erfindung erfolgt beim Unter- bzw. Überschreiten der vorab definierten Achssolllast der Triebachse 23 und/oder der Lenkachse 24 eine akustische und/oder optische Warnmeldung, so dass der Bediener 33 der Erntemaschine 1 eine Rückmeldung darüber erhält, dass der von ihm vorgegebene Druckschwellwert im Drucksystem des wenigstens einen Hubzylinder 26 nicht zu der erforderlichen Achslastverteilung führt, wenn das Vorsatzgerät für den Transport auf dem Wagen 14 abgelegt ist oder ob ein automatische Druckregelsystem fehlerhaft arbeitet. Vorzugsweise wird die Warnmeldung auf einer in der Fahrerkabine 32 angeordneten Anzeigeneinheit 31 zur Anzeige gebracht, so dass der Bediener 33 sofort die erforderlichen Schritte zur Abhilfe einleiten kann.

In einer weiteren Ausgestaltung ist vorgesehen, dass der Druckwert im Drucksystem des wenigstens einen am Einzugsgehäuse 6 montierten Hubzylinders 26 in Abhängigkeit von der Art des montierten Vorsatzgerätes 3 geregelt wird, so dass die Druckregelung an das jeweils montierte Vorsatzgerät 3 und dessen Gewicht anpassbar ist und dies die Einhaltung der normierten Achslasten insbesondere für den unerfahrenen Bediener 33 erleichtert. Denkbar ist, dass an sich bekannte Erkennungseinrichtungen, wie eine Kamera, zur Erkennung des jeweils montierten Vorsatzgerätes 3 einsetzbar sind, die über entsprechende hier nicht dargestellte Leitungen mit der Auflagedruckregeleinrichtung 25 verbunden sind.

Figur 2 zeigt nun eine Prinzipdarstellung eines an einem Einzugsgehäuse 6 einer nicht näher dargestellten Erntemaschine montierten Vorsatzgerätes 3, welches in einem Koppelungspunkt 21 mit einem ein Stützrad 16 aufweisenden Wagen 14 verbunden ist. In der dargestellten Ausführungsvariante durchfährt der schwimmend gelagerte und mit dem Vorsatzgerät 3 verbundene Wagen 14 mit dessen vorlaufend zugeordneten Stützrad 14 eine Bodensenke 34. Zur Regelung des Auflagedrucks des Stützrades 14 auf Boden 5 befindet sich seitlich, am Einzugsgehäuse 6 ein Hubzylinder der einenends im Drehpunkt 28 drehbeweglich mit dem Einzugsgehäuse und anderenends hier nicht näher dargestellt drehbeweglich im unteren Bereich der Triebachse 23 angeordnet ist. Der wenigstens eine Hubzylinder 26 ist einfachwirkend ausgeführt ist, wobei die kolbenflächige Seite 35 des Hubzylinders 26 über eine Leitung 36 mit wenigstens einem elektronischen Druckregelventil 37 verbunden ist. Mittels des Druckregelventils 37 ist der Druck in der Leitung 36 einstellbar, wobei bei Überschreitung des eingestellten Druckschwelltwertes das Druokregelventil 37 die Leitung 36 mit dem Tank 38 verbindet, so dass ein Teil des energieübertragenden Mediums in den Tank 38 abfließen kann. Es liegt im Rahmen der Erfindung, dass das elektronische Druckregelventil 37 durch ein Druckbegrenzungsventil ersetzt sein kann, welches den am Einzugsgehäuse 6 angeordneten Hubzylinder 26 trennt, sobald der Druck in der Leitung 36 den Einstellwert erreicht hat. Mittels beider Ausführungen ist die Möglichkeit geschaffen, die von dem oder den Hubzylindern 26 des Einzugsgehäuses 6 auf das Stützrad 16 und die Triebachse 23 und/oder Lenkachse der Erntemaschine übertragene Achslast auf einen festen Wert zu regeln. Über ein schaltbares 2/2-Wegeventil 39 ist die Leitung 36 zudem mit der integrierten Pumpe 40 oder dem Tank 39 verbunden. Die Druckbeaufschlagung der Leitung 39 führt dazu, dass die Kolbenstange 41 aus dem Hubzylinder 26 herausgeschoben wird. Dabei führt das Einzugsgehäuse 6 eine Schwenkbewegung um ihre hier nicht näher dargestellte an der Erntemaschine angeordneten Schwenkachse in eine bodenferne Position aus. Gleichzeitig verbleibt das am Wagen angeordnete Stützrad 16 aufgrund der eingenommenen Schwimmstellung am Boden 5. Aufgrund dessen, dass der Hubzylinder 26 einfachwirkend ausgeführt ist, führt das schwerkraftbedingte Absenken des Einzugsgehäuses 6 gleichzeitig zum Einfahren der Kolbenstange 41 des Hubzylinders 26. Es liegt im Rahmen der Erfindung, dass der wenigstens eine dem Einzugsgehäuse 6 zugeordnete Hubzylinder 26 doppeltwirkend ausgeführt ist. Zudem ist denkbar, dass der Leitung 36 ein an sich bekannter und hier nicht dargestellter Druckspeicher zugeordnet ist, um stoßartige Belastungen zu vermeiden. In der dargestellten Ausführungsvariante ist dem Druckegelventil 37 über die mit der Leitung 42 verbundene Auflagedruckregeleinrichtung 25 beispielhaft ein Druckschwellwert von 70 bar zugeordnet, wobei das aktive Anheben des Vorsatzgerätes 3 beispielhaft dann erfolgt, wenn der Hubzylinder 26 mit einem Druck von 150 bar beaufschlagt ist. Die Einstellung anderer Druckschwellwerte liegt im Rahmen der Erfindung, Dadurch bedingt, dass der Wagen 14 im am Vorsatzgerät 3 montierten Zustand, schwimmend die Bodenunebeneinheiten nachvollzieht und das Stützrad 16 somit permanent mit dem Boden 5 in Kontakt bleibt, kann die gewünschte Achslastverteilung mittels der konstanten Druckregelung des Hubzylinders 26 konstant eingehalten werden. Beim Durchfahren der Bodensenke 34 sinkt schwerkraftbedingt das montierte Vorsatzgerät 3 und gleichzeitig der Wagen im Koppelungspunkt 11 in Pfeilrichtung gegen den Boden 5 solange bis das Vorsatzgerät 3 wieder auf dem Auflagepunkt 22 aufliegt und der eingestellte Druckwert von 70 bar in der Leitung 36 erreicht ist, so dass die gewünschte und die Normierung einhaltende Verteilung der Last auf die Triebachse 23 und/oder auf die Lenkachse gegeben ist

Im Gegensatz zu Figur 2 überfährt in Figur 3 das am Wagen 14 montierte Stützrad 16 eine Bodenwelle 43. Dabei verschwenkt der Wagen 16 seine Position um die Schwenkachse 44 im am Vorsatzgerät 43 gelegenen Koppelungspunkt 11 nach oben, wobei das Stützrad 16 wiederum in Kontakt mit dem Boden 5 verbleibt Gleichzeitig wird das auf dem Auflagepunkt 22 abgelegte Vorsatzgerät 3 mit angehoben und verschwenkt gleichfalls über die nicht dargestellte Schwenkachse des Einzugsgehäuses 6 nach oben, so dass der Wagen 14 und das Vorsatzgerät 3 gemeinsam um die Schwenkachse 44 im gemeinsamen Koppelungspunkt 11 in Pfeilrichtung nach oben verschwenken, wobei die Kolbenstange 41 des Hubzylinder 26 herausfährt, welches zu einer Druckverminderung in der Leitung 36 führt. Durch die über Auflagedruckregeleinrichtung 25 vorgenommene Einstellung des Druckschwelltwertes im Druckregelventil 37 wird der in der Leitung 36 und somit im Hubzylinder 26 vorhandene Druck konstant auf 70 bar geregelt und der Auflagedruck konstant geregelt, so dass auch bei der überfährt einer Bodenwelle 43 die gewünschte Verteilung der Last des zu transsortierenden Vorsatzgerätes 3 auf die Triebachse 23 und/oder Lenkachse konstant bleibt.

Es liegt im Rahmen des Könnens eines Fachmanns das beschriebene Ausführungsbeispiel in nicht dargestellter Weise abzuwandeln, um die beschriebenen Effekte zu erzielen, ohne dabei den Rahmen der Erfindung zu verlassen.

### Bezugszeichenliste:

- 1: Selbstfahrende Erntemaschine
- 2: Feldhäcksler
- 3: Vorsatzgerät
- 4: Maisgebiss
- 5: Feldboden
- 6: Einzugsgehäuse
- 7: Schwenkachse
- 8: Sektion
- 9: Sektion
- 10: Sektion
- 11: Koppelungspunkt
- 12: Schwenklager
- 13: Maschinengestell
- 14: Wagen
- 15: Rahmengestell
- 16: Stützrad
- 17: Tragelement
- 18: Strebe
- 19: Schwinge
- 20: Drehachse
- 21: Koppelungspunkt
- 22: Auflagepunkt
- 23: Triebachse
- 24: Lenkachse
- 25: Auflagedruckregeleinrichtung
- 26: Hubzylinder
- 27: Drehpunkt
- 28: Drehpunkt
- 29: Laufräder
- 30: Steuer- und Auswerteeinheit
- 31: Anzeigeneinheit
- 32: Fahrerkabine
- 33: Bediener
- 34: Bodensenke
- 35: Kolbenflächige Seite
- 36: Leitung
- 37: Druckregelventil
- 38: Tank
- 39: 2/2 Wegeventil
- 40: Pumpe
- 41: Kolbenstange
- 42: Leitung
- 43: Bodenwelle
- 44: Schwenkachse

- FR: Fahrtrichtung

## Patentansprüche

1. Selbstfahrender Feldhäcksler (2) mit wenigstens einer mittels mindestens eines Hubzylinders (26) höhenbeweglichen Aufnahmevorrichtung zur Adaption eines landwirtschaftlichen Vorsatzgerätes (3), wobei das Vorsatzgerät (3) durch wenigstens ein mit dem Boden in Kontakt bringbares Stützrad (16) abstützbar ist,
**dadurch gekennzeichnet, dass** bei Transport des Feldhäckslers (2) das Stützrad (16) das Vorsatzgerät (3) in der Weise abstützt, dass der Auflagedruck des wenigstens einen Stützrades (16) auf dem Boden (5) mittels einer Auflagedruckregeleinrichtung (25) durch Druckbeaufschlagung und Druckentlastung des wenigstens einen Hubzylinders (26) geregelt wird, mittels dem die Aufnahmevorrichtung (6) höhenbeweglich ist, wobei eine Triebachse (23) und/oder eine Lenkachse (24) mit wenigstens einem lastsensierenden Sensor ausgerüstet ist, der lastabhängige Signale an eine Steuer- und Auswerteeinheit (30) überträgt und ein entsprechendes Steuersignal generiert wird, das den Druck des an der Aufnahmevorrichtung (6) angeordneten Hubzylinders (26) regelt, um so die Stützlast des wenigstens einen Stützrades (16) einstellen zu können, wobei beim Unter- bzw. Überschreiten einer definierbaren Achssolllast der Triebachse (23) und/oder der Lenkachse (24) des Feldhäckslers (2) eine akustische und/oder optische Warnmeldung erfolgt.

2. Selbstfahrender Feldhäcksler (2) nach Anspruch 1,
**dadurch gekennzeichnet, dass** in Transportposition des Vorsatzgerätes (3) der Druckwert des Hubzylinders (26) mittels der Auflagedruckregeleinrichtung (25) konstant geregelt wird.

3. Selbstfahrender Feldhäcksler (2) nach wenigstens einem der vorhergehenden Ansprüche, **dadurch gekennzeichnet, dass**
der Druckwert des wenigstens einen Hubzylinders (26) in Abhängigkeit von der Art des montierten Vorsatzgerätes (3) geregelt wird.

4. Selbstfahrender Feldhäcksler (2) nach wenigstens einem der vorhergehenden Ansprüche, **dadurch gekennzeichnet, dass**
die Druckregelung mittels eines Druckbegrenzungsventils und/oder Druckregelventils (37) und/oder mittels einer elektronische Druckregeleinrichtung erfolgt.

5. Selbstfahrender Feldhäcksler (2) nach wenigstens einem der vorhergehenden Ansprüche, **dadurch gekennzeichnet, dass**
zur Anzeige des eingestellten Druckwertes und des tatsächlichen Druckwertes eine Anzeigeneinheit (31) vorgesehen ist.

6. Selbstfahrender Feldhäcksler (2) nach wenigstens einem der vorhergehenden Ansprüche, **dadurch gekennzeichnet, dass**
die Warnmeldung auf einer in der Fahrerkabine (32) angeordneten Anzeigereinheit (31) zur Anzeige gebracht wird.

7. Selbstfahrender Feldhäcksler (2) nach wenigstens einem der vorhergehenden Ansprüche, **dadurch gekennzeichnet, dass**
das wenigstens eine Stützrad (16) an einem Wagen (14) montiert ist, der unter das Vorsatzgerät (3) und/oder unter den Feldhäcksler (2) schiebbar und dort verrastbar ist.

8. Selbstfahrender Feldhäcksler (2) nach Anspruch 7, **dadurch gekennzeichnet, dass** der Wagen (14) ein Rahmengestell (15) und mindestens ein sich nach unten erstreckendes Rad (16) aufweist, das Rahmengestell (15) zur Abstützung des Vorsatzgerätes (3) und zur Gewichtsentlastung der Triebachse (23) und/oder der Lenkachse (24) des Feldhäckslers (2) bei einer Transportfahrt lösbar an dem an dem Feldhäcksler (2) angebrachten Vorsatzgerät (3) befestigbar und zum Erntebetrieb vom Vorsatzgerät (3) trennbar ist, wobei der Wagen (14) im befestigten Zustand eine Schwimmstellung einnimmt.

## Claims

1. A self-propelled forage harvester (2) comprising at least one mounting device (6) movable in respect of height by means of at least one stroke cylinder (26) for adaptation of an agricultural front attachment (3), wherein the front attachment (3) can be supported by at least one support wheel (16) which can be brought into contact with the ground,
**characterised in that** in transport of the forage harvester (2) the support wheel (16) supports the front attachment (3) in such a way that the contact pressure of the at least one support wheel (16) on the ground (5) is regulated by means of a contact pressure regulating device (25) by pressure actuation and pressure relief of the at least one stroke cylinder (26), by means of which the mounting device (6) is movable in respect of height, wherein a drive axle (23) and/or the steering axle (24) is provided with at least one load-sensing sensor which transmits load-dependent signals to a control and evaluation unit (30) and a corresponding control signal is generated, which regulates the pressure of the stroke cylinder (26) arranged on the mounting device (6) in order thus to be able to adjust the support load of the at least one support wheel (16), wherein when the axle load of the drive axle (23) and/or the steering axle (24) of the forage harvester (2) falls below or rises above a definable target axle load an acoustic and/or optical warning message is produced.

2. A self-propelled forage harvester (2) according to claim 1 **characterised in that** in the transport position of the front attachment (3) the pressure value of the stroke cylinder (26) is regulated to be constant by means of the contact pressure regulating device (25).

3. A self-propelled forage harvester (2) according to at least one of the preceding claims **characterised in that** the pressure value of the at least one stroke cylinder (26) is regulated in dependence on the nature of the mounted front attachment (3).

4. A self-propelled forage harvester (2) according to at least one of the preceding claims **characterised in that** pressure regulation is effected by means of a pressure limiting value and/or pressure regulating valve (37) and/or by means of an electronic pressure regulating device.

5. A self-propelled forage harvester (2) according to at least one of the preceding claims **characterised in that** a display unit (31) is provided for displaying the set pressure value and the actual pressure value.

6. A self-propelled forage harvester (2) according to at least one of the preceding claims **characterised in that** the warning message is displayed on a display unit (31) in the driving cab (32).

7. A self-propelled forage harvester (2) according to at least one of the preceding claims **characterised in that** the at least one support wheel (16) is mounted on a carriage (14) which can be slid under the front attachment (3) and/or under the forage harvester (2) and latched there.

8. A self-propelled forage harvester (2) according to claim 7 **characterised in that** the carriage (14) has a frame structure (15) and at least one downwardly extending wheel (16), the frame structure (15) for supporting the front attachment (3) and for relieving the weight of the drive axle (23) and/or the steering axle (24) of the forage harvester (2) in a transport travel mode can be fixed releasably to the front attachment (3) which is mounted to the forage harvester (2) and can be separated from the front attachment (3) for the harvesting mode, wherein the carriage (14) in the fixed condition assumes a floating position.

## Revendications

1. Ensileuse automotrice (2) comprenant au moins un dispositif récepteur mobile en hauteur au moyen d'au moins un vérin hydraulique (26) pour adapter un outil frontal agricole (3), l'outil frontal (3) pouvant prendre appui par l'intermédiaire d'au moins une roue d'appui (16) pouvant être mise en contact avec le sol, **caractérisée en ce que**, lors du transport de l'ensileuse (2), la roue d'appui (16) supporte l'outil frontal (3) de façon que la force d'appui de la au moins une roue d'appui (16) sur le sol (5) soit régulée au moyen d'un dispositif de régulation de force d'appui (25) par mise en pression et mise hors pression du au moins un vérin hydraulique (26) au moyen duquel le dispositif récepteur (6) est mobile en hauteur, un essieu moteur (23) et/ou un essieu directeur (24) étant équipé d'au moins un capteur de détection de charge qui transmet des signaux dépendants de la charge à une unité de commande et d'analyse (30), et un signal de commande correspondant étant généré, lequel régule la pression du vérin hydraulique (26) disposé sur le dispositif récepteur (6) afin de pouvoir régler ainsi la charge d'appui de la au moins une roue d'appui (16), un avertissement acoustique et/ou optique étant produit en cas de soupassement ou de surpassement d'une charge d'essieu de consigne définie de l'essieu moteur (23) et/ou de l'essieu directeur (24) de l'ensileuse (2).

2. Ensileuse automotrice (2) selon la revendication 1, **caractérisée en ce que**, dans la position de transport de l'outil frontal (3), la valeur de pression du vérin hydraulique (26) est régulée de manière constante au moyen du dispositif de régulation de force d'appui (25).

3. Ensileuse automotrice (2) selon au moins une des revendications précédentes, **caractérisée en ce que** la valeur de pression du au moins un vérin hydraulique (26) est régulée en fonction du type de l'outil frontal (3) monté.

4. Ensileuse automotrice (2) selon au moins une des revendications précédentes, **caractérisée en ce que** la régulation de pression s'effectue au moyen d'une soupape de limitation de pression et/ou d'une soupape de régulation de pression (37) et/ou au moyen d'un dispositif de régulation de pression électronique.

5. Ensileuse automotrice (2) selon au moins une des revendications précédentes, **caractérisée en ce que**, pour afficher la valeur de pression réglée et la valeur de pression réelle, il est prévu une unité d'affichage (31).

6. Ensileuse automotrice (2) selon au moins une des revendications précédentes, **caractérisée en ce que** l'avertissement est affiché sur une unité d'affichage (31) disposée sur la cabine de conduite (32).

7. Ensileuse automotrice (2) selon au moins une des revendications précédentes, **caractérisée en ce que** la au moins une roue d'appui (16) est montée sur un chariot (14) qui peut être poussé sous l'outil frontal (3) et/ou sous l'ensileuse (2) et y être encliqueté.

8. Ensileuse automotrice (2) selon la revendication 7, **caractérisée en ce que** le chariot (14) comprend un châssis (15) et au moins une roue (16) s'étendant vers le bas, le châssis (15) pouvant, lors d'un trajet de transport, être fixé de façon amovible à l'outil frontal (3) monté sur l'ensileuse (2) pour soutenir l'outil frontal (3) et pour soulager l'essieu moteur (23) et/ou l'essieu directeur (24) de l'ensileuse (2) et pouvant, en mode de récolte, être séparé de l'outil frontal (3), le chariot (14) adoptant, à l'état fixé, une position flottante.
